# EUROPEAN PATENT APPLICATION

(11) **EP 4 521 545 A1**
(43) Date of publication of application: **12.03.2025**
(21) Application number: 23823838.0
(22) Date of filing: 09.06.2023
(51) Int. Cl.: H01M 50/636, H01G 11/78, H01G 11/80

(54) **POWER STORAGE ELEMENT AND PRODUCTION METHOD FOR POWER STORAGE ELEMENT**

(30) Priority: 14.06.2022 JP 2022096034
(71) Applicant: GS Yuasa International Ltd., Kisshoin, Minami-ku, Kyoto-shi, Kyoto 601-8520 (JP)
(72) Inventor: YAMANE Hisayuki, Kyoto-shi, Kyoto 601-8520 (JP)
(74) Representative: Isarpatent
(86) International application number: PCT/JP2023/021445
(87) International publication number: WO 2023/243548

(57) **Abstract**

An energy storage device including: a case including an electrolyte solution filling port that is for filling with an electrolyte solution; an electrolyte solution filling lid configured to seal the electrolyte solution filling port from an outside of the case; and an inner lid that is interposed between the electrolyte solution filling port and the electrolyte solution filling lid and covers the electrolyte solution filling port, in which the inner lid has an insulating property, and has a shape protruding outward of the case.

## Description

### TECHNICAL FIELD

The present invention relates to an energy storage device and a manufacturing method for the energy storage device.

### BACKGROUND ART

An energy storage device including a case, a terminal, a current collector, and a gasket is known (for example, Patent Document 1). Patent Document 1 discloses an energy storage device (secondary battery) including a case (battery lid), a terminal (positive and negative electrode terminals), a gasket (insulation seal member) that insulates the terminal and the case, a current collector (positive and negative electrode collectors), and a gasket (insulating member) interposed between the current collector and the case.

### PRIOR ART DOCUMENT

### PATENT DOCUMENT

Patent Document 1: JP-A-2013-93160

### SUMMARY OF THE INVENTION

### PROBLEMS TO BE SOLVED BY THE INVENTION

However, in the energy storage device described in Patent Document 1, for example, at a time of re-filling the case with an electrolyte solution from an electrolyte solution filling port, prevention of entry of a fragment of an electrolyte solution filling lid that seals the electrolyte solution filling port into the case from the electrolyte solution filling port is not considered.

The present invention has been made in view of such circumstances, and an object of the present invention is to provide an energy storage device capable of preventing entry of a fragment of an electrolyte solution filling lid that seals an electrolyte solution filling port into a case through the electrolyte solution filling port.

### MEANS FOR SOLVING THE PROBLEMS

An energy storage device according to an embodiment of the present invention includes: a case including an electrolyte solution filling port that is for filling with an electrolyte solution; an electrolyte solution filling lid configured to seal the electrolyte solution filling port from an outside of the case; and an inner lid that is interposed between the electrolyte solution filling port and the electrolyte solution filling lid and covers the electrolyte solution filling port, in which the inner lid has an insulating property, and has a shape protruding outward of the case.

A manufacturing method for an energy storage device according to an embodiment of the present invention is a manufacturing method for an energy storage device including: a case including an electrolyte solution filling port that is for filling with an electrolyte solution; a first electrolyte solution filling lid configured to seal the electrolyte solution filling port from an outside of the case; and a first inner lid that is interposed between the electrolyte solution filling port and the first electrolyte solution filling lid and covers the electrolyte solution filling port. The manufacturing method includes: forming an opening by cutting a part of the first electrolyte solution filling lid; removing the first inner lid through the opening; filling the case with an electrolyte solution through the opening; and covering the opening with a second electrolyte solution filling lid.

A manufacturing method for an energy storage device according to an embodiment of the present invention is a manufacturing method for an energy storage device including: a case including an electrolyte solution filling port that is for filling with an electrolyte solution; a first electrolyte solution filling lid configured to seal the electrolyte solution filling port from an outside of the case; and an inner lid that is interposed between the electrolyte solution filling port and the first electrolyte solution filling lid and covers the electrolyte solution filling port. The manufacturing method includes: forming an opening by cutting a part of the first electrolyte solution filling lid; forming a hole in the inner lid; filling the case with an electrolyte solution through the opening and the hole; and covering the opening with a second electrolyte solution filling lid.

### ADVANTAGES OF THE INVENTION

According to the energy storage device of the present invention, it is possible to efficiently prevent entry of a fragment of the electrolyte solution filling lid that seals the electrolyte solution filling port into the case through the electrolyte solution filling port.

### BRIEF DESCRIPTION OF THE DRAWINGS

Fig. 1 is a perspective view illustrating an external appearance of an energy storage device according to a first embodiment.
Fig. 2 is an exploded perspective view illustrating individual constituent elements of the energy storage device according to the first embodiment in an exploded manner.
Fig. 3 is a side cross-sectional view schematically illustrating an inner lid and the like according to the first embodiment.
Fig. 4 is a diagram illustrating a manufacturing method for electrolyte solution re-filling according to a second embodiment.
Fig. 5 is a diagram illustrating a manufacturing method for electrolyte solution re-filling according to a third embodiment.
Fig. 6 is a diagram illustrating a manufacturing method for electrolyte solution re-filling according to a fourth embodiment.
Fig. 7 is a diagram illustrating a manufacturing method for electrolyte solution re-filling according to a fifth embodiment.
Fig. 8 is a side cross-sectional view schematically illustrating an inner lid and the like according to a sixth embodiment.
Fig. 9 is a side cross-sectional view schematically illustrating an inner lid and the like according to a seventh embodiment.
Fig. 10 is a side cross-sectional view schematically illustrating an inner lid and the like after electrolyte solution re-filling according to the seventh embodiment.

### MODE FOR CARRYING OUT THE INVENTION

(1) An energy storage device according to an embodiment of the present invention includes: a case including an electrolyte solution filling port that is for filling with an electrolyte solution; an electrolyte solution filling lid configured to seal the electrolyte solution filling port from an outside of the case; and an inner lid that is interposed between the electrolyte solution filling port and the electrolyte solution filling lid and covers the electrolyte solution filling port, in which the inner lid has an insulating property, and has a shape protruding outward of the case.
   In the energy storage device according to the embodiment of (1) described above, the inner lid covers the electrolyte solution filling port, and has a shape protruding outward of the case. Accordingly, it is possible to prevent entry of a fragment of the electrolyte solution filling lid that seals the electrolyte solution filling port into the case through the electrolyte solution filling port.
(2) In the energy storage device according to (1) described above, a distal end having a protruding shape in the inner lid may be in contact with the electrolyte solution filling lid.
   According to the energy storage device according to (2) described above, the distal end having a protruding shape in the inner lid is in contact with the electrolyte solution filling lid. That is, in a state where the inner lid is in contact with an inner surface of the electrolyte solution filling lid, the electrolyte solution filling port is sealed by the electrolyte solution filling lid from the outside of the case. With such a configuration, a state where the inner lid covers the electrolyte solution filling port can be efficiently maintained. Further, it is possible to suppress displacement of the inner lid, that is, movement of the inner lid in a space between the electrolyte solution filling lid and a lid body of the case in which the electrolyte solution filling port is formed.
(3) In the energy storage device according to (1) or (2) described above, the electrolyte solution filling port is formed by a protruding portion protruding in a tubular shape from an outer surface of the case, and the inner lid encloses the protruding portion from a side of the electrolyte solution filling lid.
   According to the energy storage device described in (3) described above, the inner lid having a bottomed tubular shape (a shape in which one end portion of a tubular shape is opened and another end portion is closed) encloses the protruding portion so as to direct a bottomed tubular opening toward the protruding portion and to cover the tubular protruding portion from a periphery side. With such a configuration, it is possible to make it difficult for the inner lid to be detached from the protruding portion, and it is possible to further prevent entry of foreign matter into the case from the electrolyte solution filling port when the electrolyte solution filling lid is removed from the case.
(4) A manufacturing method for an energy storage device according to an embodiment of the present invention is a manufacturing method for an energy storage device including: a case including an electrolyte solution filling port that is for filling with an electrolyte solution; a first electrolyte solution filling lid configured to seal the electrolyte solution filling port from an outside of the case; and a first inner lid that is interposed between the electrolyte solution filling port and the first electrolyte solution filling lid and covers the electrolyte solution filling port. The manufacturing method includes: forming an opening by cutting a part of the first electrolyte solution filling lid; removing the first inner lid through the opening; filling the case with an electrolyte solution through the opening; and covering the opening with a second electrolyte solution filling lid.
(5) A manufacturing method for an energy storage device according to an embodiment of the present invention is a manufacturing method for an energy storage device including: a case including an electrolyte solution filling port that is for filling with an electrolyte solution; a first electrolyte solution filling lid configured to seal the electrolyte solution filling port from an outside of the case; and an inner lid that is interposed between the electrolyte solution filling port and the first electrolyte solution filling lid and covers the electrolyte solution filling port. The manufacturing method includes: forming an opening by cutting a part of the first electrolyte solution filling lid; forming a hole in the inner lid; filling the case with an electrolyte solution through the opening and the hole; and covering the opening with a second electrolyte solution filling lid.
   According to the manufacturing method for the energy storage device according to the embodiments of (4) and (5) described above, a cut piece is generated when a part of the first electrolyte solution filling lid is cut, but the inner lid (first inner lid) prevents entry of the cut piece into the case through the electrolyte solution filling port. Accordingly, in recycling (reusing) the energy storage device, it is possible to prevent performance deterioration of the energy storage device due to entry (metal contamination) of the cut piece into the case.
(6) In the manufacturing method for the energy storage device according to (4) described above, in a process of the covering the opening with the second electrolyte solution filling lid, the first inner lid or a second inner lid different from the first inner lid is disposed between the electrolyte solution filling port and the second electrolyte solution filling lid.

According to the energy storage device described in (6) described above, since the electrolyte solution filling port is covered with the inner lid even after electrolyte solution re-filling, it is possible to prevent entry of a cut piece generated when a part of the second electrolyte solution filling lid is cut into the case through the electrolyte solution filling port, when the electrolyte solution filling of the second time is performed.

Hereinafter, with reference to the drawings, an energy storage device according to embodiments (and a modification example thereof) of the present invention will be described. Note that each of the embodiments described below illustrates a comprehensive or specific example. Numerical values, shapes, materials, constituent elements, arrangement positions and connection modes of the constituent elements, manufacturing processes, the order of the manufacturing processes, and the like shown in the following embodiments are merely examples, and are not intended to limit the present invention. In addition, among constituent elements in the following embodiments, the constituent elements not described in independent claims illustrating an uppermost concept are described as any constituent elements. Further, in each figure, dimensions and the like are not strictly illustrated.

Further, in the following description and drawings, an X axis direction is defined as an arrangement direction of a pair of terminals (a positive electrode and a negative electrode, which similarly applies hereinafter) of the energy storage device, an arrangement direction of a pair of current collectors, an arrangement direction of a pair of upper gaskets, an arrangement direction of a pair of lower gaskets, an arrangement direction of both end portions of an electrode assembly (a pair of active material layer non-forming parts), a winding axis direction of the electrode assembly, or a counter direction of short side surfaces of the case. In addition, a Y-axis direction is defined as a counter direction of long side surfaces of the case, a short side direction of short side surfaces of the case, a thickness direction of the case, or an arrangement direction of leg portions (electrode assembly connecting portions) in one current collector. Further, a Z axis direction is defined as an arrangement direction of a case body and the lid body of the energy storage device, a longitudinal direction of a short side surface of the case, or an extending direction of a leg portion (electrode assembly connecting portion) of the current collector. The X-axis direction, the Y-axis direction, and the Z-axis direction are directions intersecting (orthogonal to, in the present embodiment) each other. Further, in the following description, for example, an X-axis plus direction indicates an arrow direction of the X-axis, and an X-axis minus direction indicates a direction opposite to the X-axis plus direction. This similarly applies to the Y-axis direction and the Z-axis direction.

### (First Embodiment)

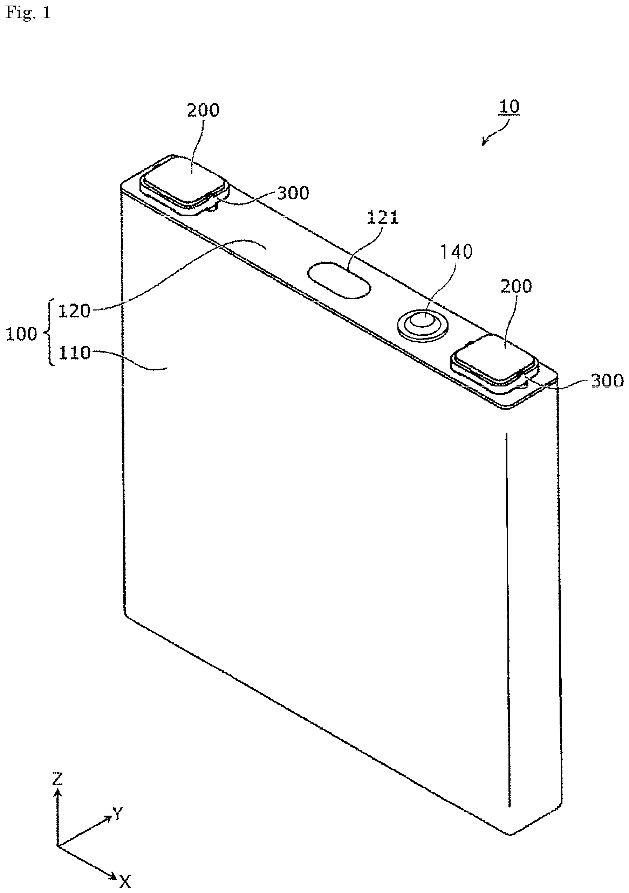

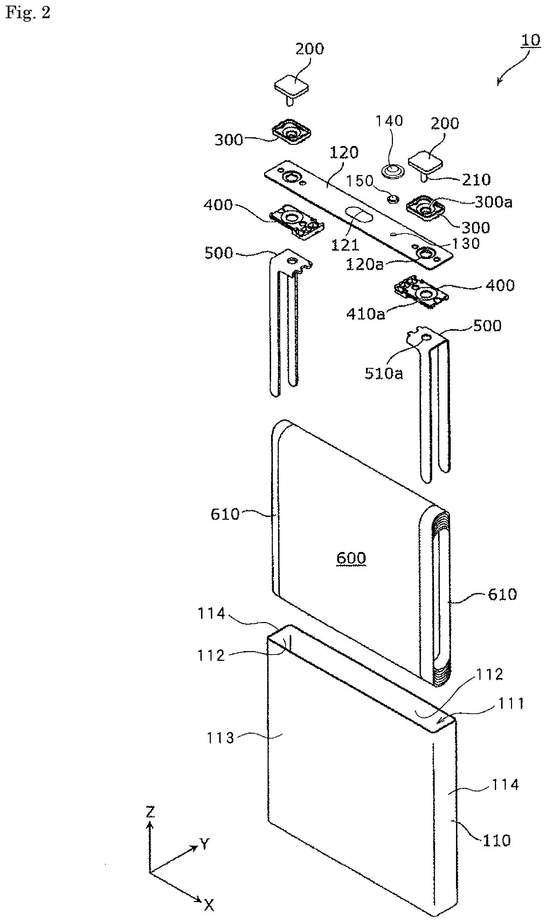

Hereinafter, the present invention will be described in detail with reference to the drawings illustrating embodiments thereof. Fig. 1 is a perspective view illustrating an external appearance of an energy storage device according to a first embodiment. Fig. 2 is an exploded perspective view illustrating individual constituent elements of the energy storage device according to the first embodiment in an exploded manner. With reference to Figs. 1 and 2, an overall description of an energy storage device 10 in the present embodiment will be given.

The energy storage device 10 is a secondary battery capable of being charged with electricity and being discharged with electricity, and is specifically a nonaqueous electrolyte secondary battery such as a lithium ion secondary battery. The energy storage device 10 is used as, for example, a power source for an automobile such as an electric vehicle (EV), a hybrid electric vehicle (HEV), or a plug-in hybrid electric vehicle (PHEV), a power source for electronic equipment, a power source for power storage, and the like. Note that the energy storage device 10 is not limited to the nonaqueous electrolyte secondary battery, and may be a secondary battery other than the nonaqueous electrolyte secondary battery, or may be a capacitor. The energy storage device 10 may be a primary battery. Further, the energy storage device 10 may be a battery using a solid electrolyte. In the present embodiment, the energy storage device 10 having a rectangular parallelepiped shape (prismatic) is illustrated, but a shape of the energy storage device 10 is not limited to the rectangular parallelepiped shape. The shape may be a cylindrical shape, an oval cylindrical shape, a polygonal columnar shape other than a rectangular parallelepiped, or the like.

As illustrated in the present embodiment, the energy storage device 10 includes a case 100, positive and negative electrode terminals 200, and upper gaskets 300 of the positive electrode and the negative electrode. The case 100 internally houses insulating members 400 for the positive electrode and the negative electrode, current collectors 500 for the positive electrode and the negative electrode, and an electrode assembly 600. The insulating member 400 may include a resin plate having an insulating property, and function as a lower gasket.

An electrolyte solution (nonaqueous electrolyte) is sealed in the case 100, but the illustration thereof is omitted. The electrolyte solution is not particularly limited in type as long as the performance of the energy storage device 10 is not impaired, and various electrolyte solutions can be selected. In addition to the above constituent elements described above, a spacer disposed on a side of the current collector 500 of the positive electrode and the negative electrode, an insulating film enclosing the electrode assembly 600, and the like may be disposed.

The case 100 includes a case body 110 having a rectangular tubular shape and a bottom, and a lid body 120 which is a plate-shaped member to close an opening 111 of the case body 110. After the electrode assembly 600 and the like are housed in the case 100, the case body 110 and the lid body 120 are welded or the like, so that the inside of the case can be sealed. Note that a material of the case body 110 and the lid body 120 is not particularly limited. For example, weldable metal such as stainless steel, aluminum, or an aluminum alloy can be used, but resin can also be used. The lid body 120 is also provided with a gas release valve 121 that releases pressure when the pressure inside the case 100 increases, and an electrolyte solution filling port 130 which is for filling with the electrolyte solution into the case 100.

On an outer surface of the lid body 120, an electrolyte solution filling lid 140 is provided so as to cover the electrolyte solution filling port 130. The electrolyte solution filling lid 140 seals the electrolyte solution filling port 130 from the outside of the case 100. Between the electrolyte solution filling port 130 provided on the lid body 120 and the electrolyte solution filling lid 140, an inner lid 150 which covers the electrolyte solution filling port 130 is provided. The inner lid 150 is formed of, for example, a resin such as polycarbonate (PC), polypropylene (PP), polyethylene (PE), or polyphenylene sulfide resin (PPS), and has an insulating property. Details of the electrolyte solution filling lid 140 and the inner lid 150 will be described later.

The electrode assembly 600 is an energy storage element (power generating element) which includes a positive electrode plate, a negative electrode plate, and a separator, and can store electricity. The positive electrode plate is an electrode plate in which a positive active material layer is formed on a positive substrate layer which is an elongated strip-shaped current collecting foil made of aluminum, an aluminum alloy, or the like. The negative electrode plate is an electrode plate in which a negative active material layer is formed on a negative substrate layer which is an elongated strip-shaped current collecting foil made of copper, a copper alloy, or the like. Note that, as the current collecting foil described above, a known material such as nickel, iron, stainless steel, titanium, baked carbon, conductive polymer, conductive glass, or Al-Cd alloy can be appropriately used. Further, as the positive active material and the negative active material used for the positive active material layer and the negative active material layer, a known material can be appropriately used as long as the active material can occlude and release lithium ions. As the separator, for example, a microporous sheet made of a resin or a non-woven fabric can be used.

The electrode assembly 600 is formed by disposing and winding the separator between the positive electrode plate and the negative electrode plate. To be more specific, in the electrode assembly 600, the positive electrode plate and the negative electrode plate are wound with the separator interposed therebetween, in a state where the positive electrode plate and the negative electrode plate are displaced from each other in a direction of a winding axis (a virtual axis parallel to the X axis direction, in the present embodiment). The positive electrode plate and the negative electrode plate each include a portion (active material layer non-forming part) where the active material is not applied (the active material layer is not formed), and the substrate layer is exposed, at an end portion in each shifted direction. That is, the electrode assembly 600 includes a positive electrode converged portion where the active material layer non-forming part of the positive electrode plate is stacked and bundled at one end portion 610, and includes a negative electrode converged portion where the active material layer non-forming part of the negative electrode plate is stacked and bundled at another end portion 610. Note that, in the present embodiment, an oval shape is illustrated as a cross-sectional shape of the electrode assembly 600, but a circular type, an elliptic type or the like may be adopted.

The terminal 200 is a terminal (a positive electrode terminal and a negative electrode terminal) electrically connected to the positive electrode plate and the negative electrode plate of the electrode assembly 600 through the current collector 500. That is, the terminal 200 is a metal member for leading out electricity stored in the electrode assembly 600 to a space outside the energy storage device 10, and for introducing electricity into a space inside the energy storage device 10 in order to store electricity in the electrode assembly 600. The terminal 200 is attached to the lid body 120 disposed above the electrode assembly 600. Specifically, as illustrated in Fig. 2, a shaft portion 210 of the terminal 200 is inserted into a through hole 300a of the upper gasket 300, a through hole 120a of the lid body 120, a through hole 410a of the insulating member 400 (lower gasket), and a through hole 510a of the current collector 500 and caulked, whereby the terminal 200 is fixed to the lid body 120 together with the current collector 500. Note that, the terminal 200 is made of aluminum, an aluminum alloy, copper, a copper alloy, or the like.

The current collectors 500 are members (a positive electrode current collector and a negative electrode current collector) disposed on both sides of the electrode assembly 600 in the X axis direction and connected to the end portions 610 of the electrode assembly 600. Specifically, the current collectors 500 are members having conductivity and rigidity and disposed between the end portion 610 of the electrode assembly 600 and a side wall of the case body 110, and are electrically connected to the terminal 200 and the positive electrode converged portion and the negative electrode converged portion of the end portion 610 of the electrode assembly 600. Further, the current collectors 500 are fixedly connected (joined) to the lid body 120 and the end portion 610 of the electrode assembly 600. With this configuration, the electrode assembly 600 is held (supported) in a state of being suspended from the lid body 120 by the current collector 500, and swinging due to vibration, impact or the like is suppressed. Note that, a material of the current collectors 500 is not limited. However, for example, the current collector 500 on the positive electrode side is formed of aluminum, an aluminum alloy, or the like similarly to the positive electrode substrate layer of the electrode assembly 600, and the current collector 500 on the negative electrode side is formed of copper, a copper alloy, or the like similarly to the negative electrode substrate layer of the electrode assembly 600.

The upper gaskets 300 are members (a positive electrode upper gasket and a negative electrode upper gasket) that are disposed between the lid body 120 of the case 100 and the terminal 200, and insulate and seal between the lid body 120 and the terminal 200. Specifically, the upper gasket 300 has a shape in which the through hole 300a into which the shaft portion 210 of the terminal 200 is inserted is formed in a central portion of a rectangular substantially plate-shaped member, and the upper gasket 300 is fixed to the lid body 120 by inserting and caulking the shaft portion 210 into the through hole 300a. The upper gaskets 300 are made of, for example, a resin such as polycarbonate (PC), polypropylene (PP), polyethylene (PE), or polyphenylene sulfide resin (PPS).

The insulating members 400 (lower gaskets) are member (a positive electrode insulating member and a negative electrode insulating member) that are disposed between the lid body 120 of the case 100 and the current collector 500, and provide insulation between the lid body 120 and the current collector 500. Specifically, the insulating member 400 has a shape in which the through hole 410a into which the shaft portion 210 of the terminal 200 is inserted is formed in a substantially central portion of a rectangular substantially plate-shaped member, and the insulating member 400 is fixed to the lid body 120 by inserting and caulking the shaft portion 210 into the through hole 410a. The insulating member 400 is formed of, for example, a resin such as PC, PP, PE, or PPS.

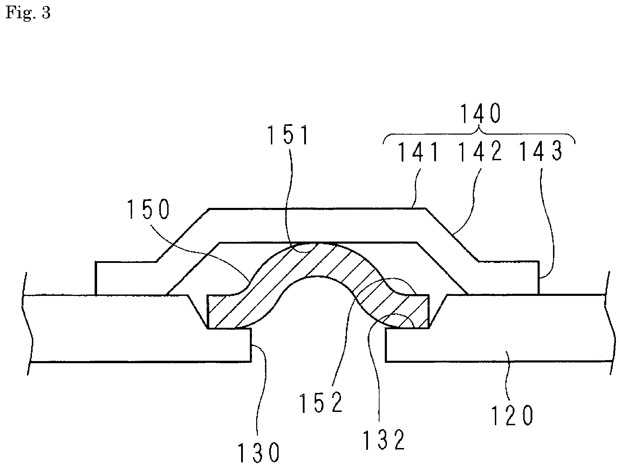

Fig. 3 is a side cross-sectional view schematically illustrating an inner lid and the like according to the first embodiment. For example, a circular through hole is formed in the lid body 120 that closes the opening 111 of the case body 110, and the through hole forms the electrolyte solution filling port 130 which is for filling with the electrolyte solution. The electrolyte solution filling port 130 is provided, for example, between the gas release valve 121 and the terminal 200.

The lid body 120 may be provided with, for example, a circular recessed portion 132, and the electrolyte solution filling port 130 (through hole) may be formed at a center of the recessed portion 132. By providing the recessed portion 132, a step is formed on the outer surface of the lid body 120.

The inner lid 150 is provided to cover the electrolyte solution filling port 130 from the outer surface side of the lid body 120. The inner lid 150 is made of resin, for example, and has an insulating property. The inner lid 150 is convex outward from the case 100. Specifically, the inner lid 150 has a tubular shape, and one end side of the tubular shape is opened and another end side includes a bottom portion 151 (bottomed tubular shape). The inner lid 150 has a shape in which a cross-sectional area of the tube increases toward the opening. At an end portion of the opening of the inner lid 150, a flange-shaped peripheral edge portion 152 extending from the opening toward the periphery side may be provided.

The inner lid 150 is disposed so as to have an opening facing the electrolyte solution filling port 130 and cover the electrolyte solution filling port 130. At this time, the flange-shaped peripheral edge portion 152 located at a periphery of the opening is disposed in the recessed portion 132 where the electrolyte solution filling port 130 is formed. An inner diameter of the circular recessed portion 132 and an outer diameter of the peripheral edge portion 152 of the inner lid 150 are made to be substantially the same length. With such a configuration, the inner lid 150 is fitted into the recessed portion 132, and it is possible to restrict or suppress movement or displacement of the inner lid 150 with respect to the lid body 120.

With the inner lid 150 fitted in the recessed portion 132 and disposed on the outer surface of the lid body 120, the bottom portion 151 of the inner lid 150 is located to protrude from the outer surface of the lid body 120. That is, the tubular inner lid 150 protrudes from the recessed portion 132 by a length of the tube. The bottom portion 151 of the inner lid 150 protrudes outward from the outer surface of the lid body 120.

The electrolyte solution filling lid 140 has a tubular shape, and one end side of the tubular shape is opened, and another end side includes a bottom plate 141. The electrolyte solution filling lid 140 has a shape in which a cross-sectional area of the tube increases toward the opening. An annular (flange-shaped) joint portion 143 extending from the opening toward the periphery side is provided at an opening end portion of the electrolyte solution filling lid 140.

Between the joint portion 143 and the bottom plate 141, the tube portion is located. In the tube, a portion adjacent to the joint portion 143 corresponds to a portion (cut portion 142) where the electrolyte solution filling lid 140 is cut. By cutting the electrolyte solution filling lid 140 at the cut portion 142, a part of the electrolyte solution filling lid 140 can be divided (separated) from the lid body 120.

The electrolyte solution filling lid 140 is disposed so as to have an opening facing the bottom portion 151 of the inner lid 150 and cover the inner lid 150. As described above, since the inner lid 150 is provided to cover the electrolyte solution filling port 130, the electrolyte solution filling lid 140 covers the inner lid 150 and the electrolyte solution filling port 130, thereby sealing the electrolyte solution filling port 130 from the outside of the case 100.

The joint portion 143 of the electrolyte solution filling lid 140 is joined to the outer surface of the lid body 120, whereby the electrolyte solution filling lid 140 is fixed to the lid body 120. At this time, an outer surface of the bottom portion 151 of the inner lid 150 faces an inner surface of the bottom plate 141 of the electrolyte solution filling lid 140. Further, the inner surface of the bottom plate 141 of the electrolyte solution filling lid 140 comes into contact with the outer surface of the bottom portion 151 of the inner lid 150 or presses the outer surface.

In a case where the electrolyte solution filling port 130 formed in the lid body 120 is separated from the inner surface of the bottom plate 141 of the electrolyte solution filling lid 140 that seals the electrolyte solution filling port 130, a space is formed between the lid body 120 and the electrolyte solution filling lid 140. At this time, the bottom portion 151 of the inner lid 150 comes into contact with the inner surface of the bottom plate 141 of the electrolyte solution filling lid 140, or is pressed by the inner surface of the bottom plate 141 of the electrolyte solution filling lid 140, whereby a positional displacement of the inner lid 150 can be suppressed.

### (Second Embodiment)

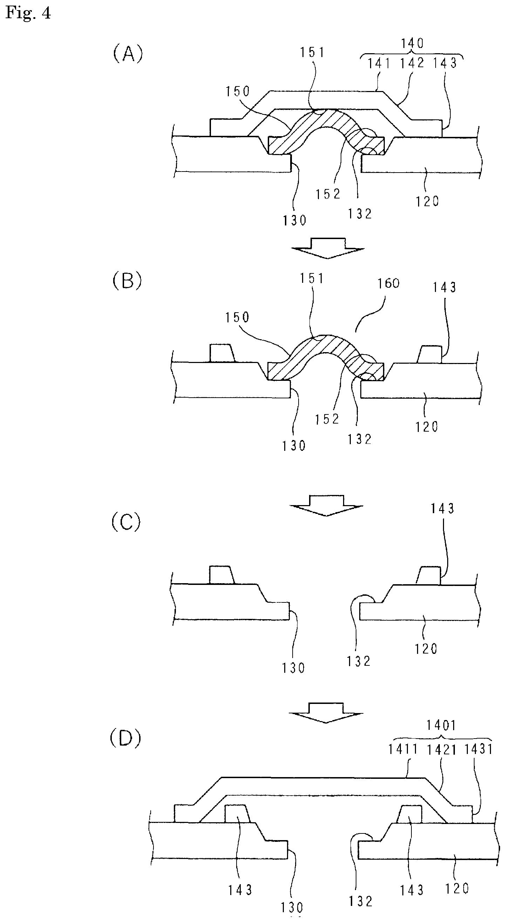

Fig. 4 is a diagram illustrating a manufacturing method for electrolyte solution re-filling according to a second embodiment. Figs. 4(A) to 4(D) illustrate individual states from a state before electrolyte solution re-filling according to the second embodiment to a state where the electrolyte solution filling port 130 is sealed after the electrolyte solution re-filling.

Fig. 4(A) is a diagram of a state before electrolyte solution re-filling is performed. The inner lid 150 is disposed between the electrolyte solution filling port 130 and the first electrolyte solution filling lid 140. The joint portion 143 of the first electrolyte solution filling lid 140 and the lid body 120 are welded to seal the electrolyte solution filling port 130.

Fig. 4(B) is a diagram illustrating a state where a part of the first electrolyte solution filling lid 140 is cut. An opening 160 is formed by cutting the cut portion 142 of the first electrolyte solution filling lid 140, and removing the bottom plate 141 of the first electrolyte solution filling lid 140. When the cut portion 142 is cut, the presence of the inner lid 150 can prevent entry of a cut piece generated by the cutting, into the case 100 through the electrolyte solution filling port 130.

Fig. 4(C) is a diagram of a state where the inner lid 150 is removed. The inner lid 150 is removed from the opening 160. After the inner lid 150 is removed, the case 100 is filled with the electrolyte solution through the opening 160 and the electrolyte solution filling port 130. That is, electrolyte solution re-filling into the case 100 is performed through the opening 160 and the electrolyte solution filling port 130.

Fig. 4(D) is a diagram illustrating a state where a second electrolyte solution filling lid 1401 is disposed after the electrolyte solution re-filling. The second electrolyte solution filling lid 1401 has a shape covering the electrolyte solution filling port 130 and the joint portion 143 of the first electrolyte solution filling lid 140. The second electrolyte solution filling lid 1401 is disposed such that the second electrolyte solution filling lid 1401 covers the electrolyte solution filling port 130 and the joint portion 143 of the first electrolyte solution filling lid 140. Thereafter, a connecting portion 1431 of the second electrolyte solution filling lid 1401 is welded to the lid body 120. The electrolyte solution filling port 130 is sealed by this welding.

### (Third Embodiment)

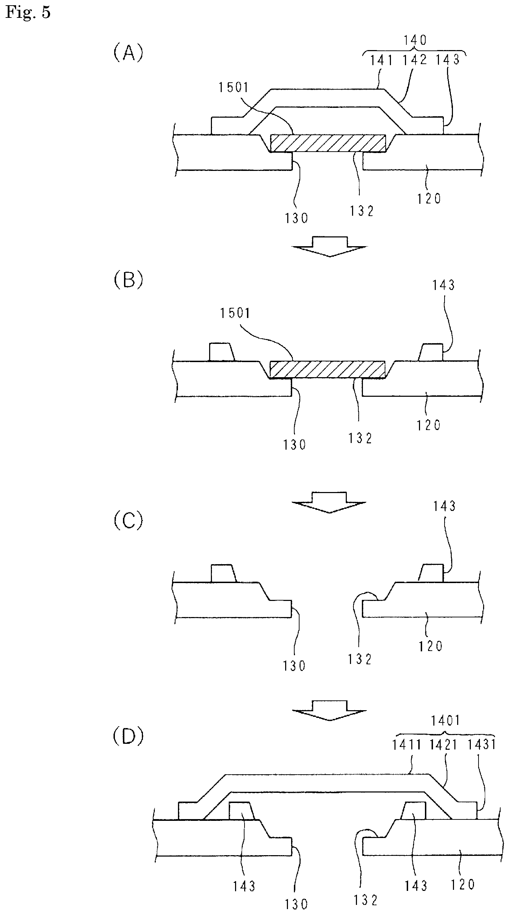

Fig. 5 is a diagram illustrating a manufacturing method for electrolyte solution re-filling according to a third embodiment. Figs. 5(A) to 5(D) illustrate states from a state before electrolyte solution re-filling according to the third embodiment to a state where the electrolyte solution filling port 130 is sealed after the electrolyte solution re-filling. The third embodiment is the same as the second embodiment except for a shape of an inner lid 1501. The inner lid may have a plate shape as in the inner lid 1501 of the present embodiment. When a plate-shaped inner lid is used, the inner lid 1501 may be joined to the case 100 with use of an adhesive or the like in order to fix the inner lid 1501. The inner lid 1501 may include a convex part, and a part of the convex part may be inserted into the electrolyte solution filling port 130. The convex part suppresses movement of the inner lid 1501.

### (Fourth Embodiment)

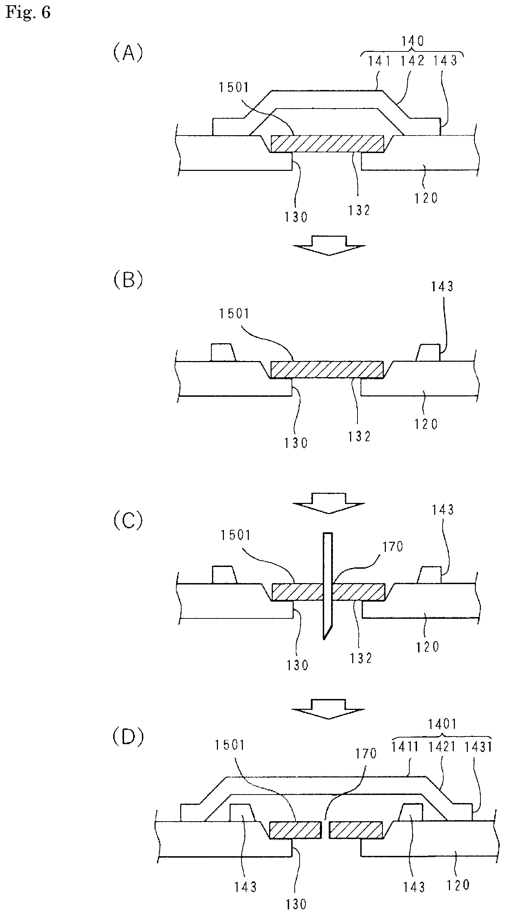

Fig. 6 is a diagram illustrating a manufacturing method for electrolyte solution re-filling according to a fourth embodiment. Figs. 6(A) to 6(D) illustrate individual states from a state before electrolyte solution re-filling according to the fourth embodiment to a state where the electrolyte solution filling port 130 is sealed after the electrolyte solution re-filling. Processes of Figs. 6(A) and 6(B) are the same as those in the third embodiment.

Fig. 6(C)is a diagram of a state where electrolyte solution filling is being performed. In the third embodiment, the inner lid 1501 is removed from the opening 160. However, in the present embodiment, the inner lid 1501 is not removed. In the present embodiment, the electrolyte solution re-filling is performed using a syringe. Specifically, a needle portion of the syringe is inserted into the inner lid 1501 to form a hole 170 in the inner lid, and the case 100 is filled with the electrolyte solution through the needle portion.

Fig. 6(D) is a diagram in which a second electrolyte solution filling lid is provided after the electrolyte solution re-filling. In a state where the electrolyte solution filling port 130 is covered with the inner lid 1501, the second electrolyte solution filling lid 1401 is disposed such that the second electrolyte solution filling lid 1401 covers the inner lid 1501 and the joint portion 143 of the first electrolyte solution filling lid 140. Thereafter, the connecting portion 1431 of the second electrolyte solution filling lid 1401 is welded to the lid body 120. The electrolyte solution filling port 130 is sealed by this welding. Note that, in the present embodiment, the hole 170 is formed in the inner lid 1501 with use of the needle portion of the syringe, but the present invention is not limited thereto. The hole of the inner lid may be formed by a member other than the needle portion of the syringe, and then the needle portion of the syringe may be inserted into the hole and electrolyte solution filling may be performed. A material of the inner lid 1501 used in the present embodiment is preferably resin or rubber.

### (Fifth Embodiment)

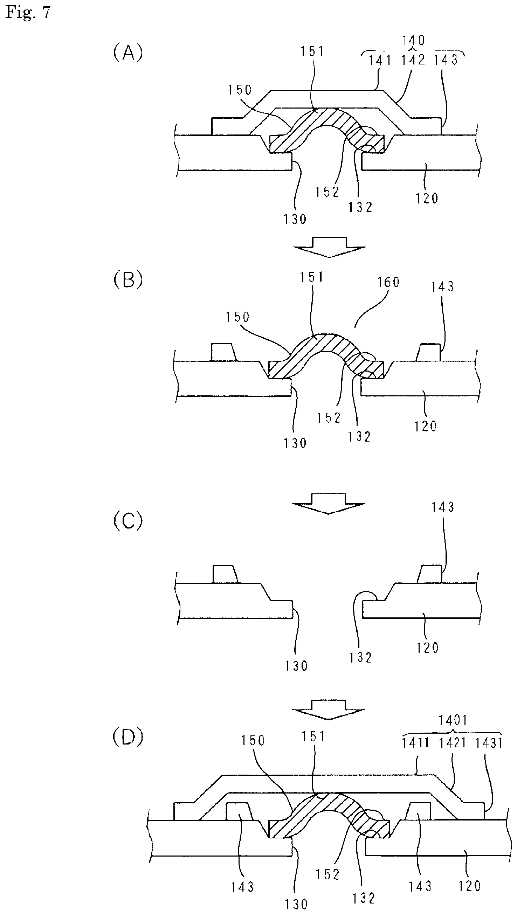

Fig. 7 is a diagram illustrating a manufacturing method for electrolyte solution re-filling according to a fifth embodiment. Figs. 7(A) to 7(D) illustrate states from a state before electrolyte solution re-filling according to the fifth embodiment to a state where the electrolyte solution filling port 130 is sealed after the electrolyte solution re-filling. Processes of Figs. 7(A), 7(B), and 7(C) are the same as those in the third embodiment.

Fig. 7(D) is a diagram in which the second electrolyte solution filling lid 1401 is provided after the electrolyte solution re-filling. In the second embodiment, the second electrolyte solution filling lid 1401 is joined to the case in a state where the inner lid 150 is removed. However, in the present embodiment, the inner lid 150 is disposed so as to cover the electrolyte solution filling port 130 with the inner lid 150 after the electrolyte solution re-filling. Next, the second electrolyte solution filling lid 1401 is disposed such that the second electrolyte solution filling lid 1401 covers the inner lid 150 and the joint portion 143 of the first electrolyte solution filling lid 140. Thereafter, the connecting portion 1431 of the second electrolyte solution filling lid 1401 is welded to the lid body 120. The electrolyte solution filling port 130 is sealed by this welding. By disposing the inner lid 150 so as to cover the electrolyte solution filling port 130 again, it is possible to prevent entry of a cut piece generated by cutting, into the case through the electrolyte solution filling port 130, when a cut portion 1421 of the second electrolyte solution filling lid 1401 is cut at the time of the electrolyte solution re-filling of the second time. Note that, the inner lid after the electrolyte solution re-filling illustrated in Fig. 7(D) may be the same as the inner lid 150 before the electrolyte solution re-filling illustrated in Fig. 7(A), or may be an inner lid different from the inner lid 150 before the electrolyte solution re-filling illustrated in Fig. 7(A).

### (Sixth Embodiment)

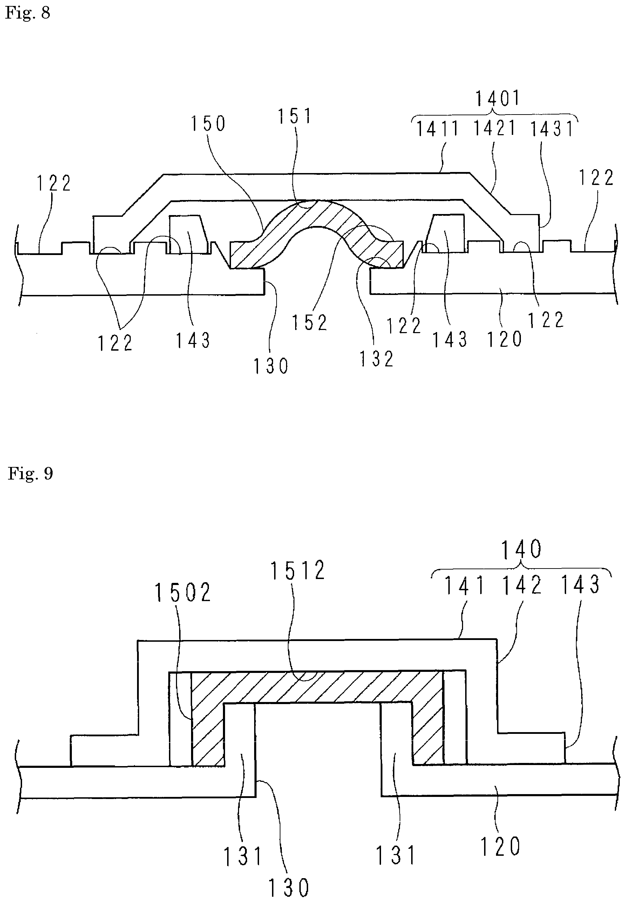

Fig. 8 is a side cross-sectional view schematically illustrating an inner lid and the like according to a sixth embodiment. On the outer surface of the lid body 120, a groove 122 corresponding to a peripheral shape of the opening of the inner lid 150 is formed, at the periphery of the electrolyte solution filling port 130. In this case, an end surface on the opening side (opening end portion) of the electrolyte solution filling lid 140 is disposed in the groove 122 formed in the periphery of the electrolyte solution filling port 130. The groove 122 may be formed in a circular shape (along a circumference) concentric with the circular electrolyte solution filling port 130. A plurality of grooves 122 may be formed concentrically to correspond to a plurality of times of re-filling. By forming the annular groove 122 corresponding to the joint portion 143 of the electrolyte solution filling lid 140 on the outer surface of the case 100, the electrolyte solution filling lid 140 can be easily positioned by using the groove 122 when being welded to the outer surface of the case 100. When the energy storage device 10 is recycled (reused), a diameter of the new electrolyte solution filling lid 1401 after electrolyte solution re-filling is larger than a diameter of the electrolyte solution filling lid 140 before the electrolyte solution re-filling. On the other hand, among the plurality of grooves 122 formed concentrically, by using a groove 122 on an outer side of a groove 122 used for the electrolyte solution filling lid 140 before electrolyte solution re-filling, it is possible to easily perform positioning with respect to a new electrolyte solution filling lid 1401 after electrolyte solution re-filling.

### (Seventh Embodiment)

Fig. 9 is a side cross-sectional view schematically illustrating an inner lid and the like according to a seventh embodiment. The electrolyte solution filling lid 140 and an inner lid 1502 of the seventh embodiment have a tubular shape similarly to the first embodiment. The electrolyte solution filling lid 140 and the inner lid 1502 are configured such that a cross-sectional area of a tube is constant. The electrolyte solution filling lid 140 presses the inner lid 150 similarly to the first embodiment.

A tubular (cylindrical) protruding portion 131 is provided on the outer surface of the lid body 120, and a circular through hole is formed at a center of the protruding portion 131. The through hole forms the electrolyte solution filling port 130 which is for filling with the electrolyte solution. That is, the protruding portion 131 forms a tubular body protruding from the outer surface of the lid body 120.

The inner lid 1502 is disposed so as to direct the tubular opening toward the electrolyte solution filling port 130 and to enclose the tubular protruding portion 131 from the peripheral surface side. An inner diameter of the tube of the inner lid 1502 and an outer diameter of the tube of the protruding portion 131 are made substantially the same. A length of the tube of the inner lid 1502 and a height (protrusion length) of the protruding portion 131 are made the same. By setting the lengths and diameters of the inner lid 1502 and the protruding portion 131 in this manner, adherence between the inner lid 1502 and the protruding portion 131 can be improved, and the inner lid 1502 can be made difficult to be detached from the protruding portion 131. Accordingly, when the electrolyte solution filling lid 140 is removed from the case 100, it is possible to further prevent entry of foreign matter into the case 100 through the electrolyte solution filling port 130.

Also in the present embodiment, the inner surface of the bottom plate 141 of the electrolyte solution filling lid 140 comes into contact with an outer surface of the bottom portion 1512 of the inner lid 1502 or presses the outer surface. Accordingly, the bottom portion 1512 of the inner lid 1502 is sandwiched between the inner surface of the bottom plate 141 of the electrolyte solution filling lid 140 and a distal end surface of the protruding portion 131. In this manner, by sandwiching the inner lid 1502 between the electrolyte solution filling lid 140 and the protruding portion 131, it is possible to further suppress a positional displacement of the inner lid 1502.

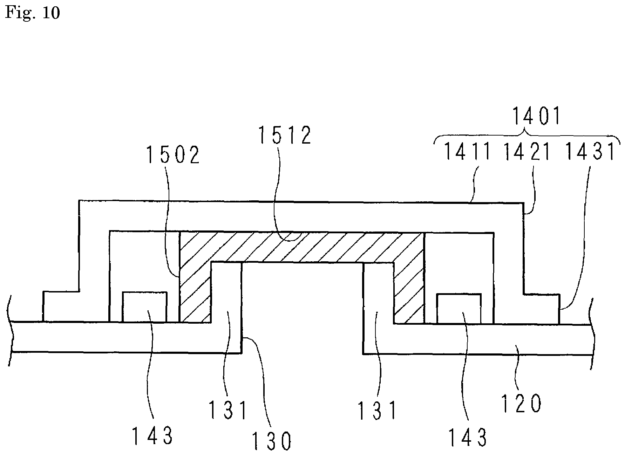

Fig. 10 is a side cross-sectional view schematically illustrating an inner lid and the like after electrolyte solution re-filling according to the seventh embodiment. Also in the present embodiment, as a new electrolyte solution filling lid 1401 after the electrolyte solution re-filling, an electrolyte solution filling lid 1401 having a larger inner diameter of an opening than the electrolyte solution filling lid 140 before the electrolyte solution re-filling (the electrolyte solution filling lid 140 cut at the cut portion 142) is used.

### (Other Embodiments)

Regarding a shape of the inner lid, a convex inner lid of a tube has been disclosed in the second embodiment, and a plate-shaped inner lid has been disclosed in the third embodiment. However, in the manufacturing method for the electrolyte solution re-filling, the shape of the inner lid is not limited to these shapes. The inner lid may have any shape as long as the electrolyte solution filling port is covered.

In the second to fifth embodiments described above, the configuration has been disclosed in which the connecting portion 1431 of the second electrolyte solution filling lid 1401 is welded to the lid body 120. However, a method for joining the connecting portion 1431 of the second electrolyte solution filling lid 1401 and the lid body 120 is not limited. For example, joining may be performed using an adhesive or the like.

It should be understood that the embodiments disclosed herein are illustrative in all respects and are not restrictive. The scope of the present invention is defined not by the meanings described above but by the claims, and it is intended to include all modifications within the meaning and scope equivalent to the claims.

### DESCRIPTION OF REFERENCE SIGNS

10: Energy storage device
100: Case
110: Case body
111: Opening
120: Lid body
121: Gas release valve
122: Groove
130: Electrolyte solution filling port
131: Protruding portion
132: Recessed portion
140: Electrolyte solution filling lid, First electrolyte solution filling lid
1401: Second electrolyte solution filling lid
141, 1401: Bottom plate
142, 1421: Cut portion
143: Joint portion
1431: Joint portion (joint portion after electrolyte solution re-filling)
150, 1501, 1502: Inner lid
151, 1512: Bottom portion
152: Peripheral edge portion
160: Opening
170: Hole
200: Terminal
300: Upper gasket
400: Insulating member (lower gasket)
500: Current collector
600: Electrode assembly
610: End portion

## Claims

1. An energy storage device comprising:
a case including an electrolyte solution filling port that is for filling with an electrolyte solution;
an electrolyte solution filling lid configured to seal the electrolyte solution filling port from an outside of the case; and
an inner lid that is interposed between the electrolyte solution filling port and the electrolyte solution filling lid and covers the electrolyte solution filling port, wherein
the inner lid has an insulating property, and has a shape protruding outward of the case.

2. A manufacturing method for an energy storage device including:
a case including an electrolyte solution filling port that is for filling with an electrolyte solution;
a first electrolyte solution filling lid configured to seal the electrolyte solution filling port from an outside of the case; and
a first inner lid that is interposed between the electrolyte solution filling port and the first electrolyte solution filling lid and covers the electrolyte solution filling port,
the manufacturing method comprising:
forming an opening by cutting a part of the first electrolyte solution filling lid;
removing the first inner lid through the opening;
filling the case with an electrolyte solution through the opening, and
covering the opening with a second electrolyte solution filling lid.

3. A manufacturing method for an energy storage device including:
a case including an electrolyte solution filling port that is for filling with an electrolyte solution;
a first electrolyte solution filling lid configured to seal the electrolyte solution filling port from an outside of the case; and
an inner lid that is interposed between the electrolyte solution filling port and the first electrolyte solution filling lid and covers the electrolyte solution filling port,
the manufacturing method comprising:
forming an opening by cutting a part of the first electrolyte solution filling lid;
forming a hole in the inner lid;
filling the case with an electrolyte solution through the opening and the hole; and
covering the opening with a second electrolyte solution filling lid.

4. The manufacturing method for the energy storage device according to claim 2, wherein
in a process of the covering the opening with the second electrolyte solution filling lid, the first inner lid or a second inner lid different from the first inner lid is disposed between the second electrolyte solution filling lid and the electrolyte solution filling port.
